# EUROPEAN PATENT SPECIFICATION

(11) **EP 3 419 375 B1**
(45) Date of publication and mention of the grant of the patent: **20.05.2026**
(21) Application number: 17752696.9
(22) Date of filing: 17.02.2017
(51) Int. Cl.: H04W 74/0833, H04W 74/00, H04W 76/15

(54) **RESOURCE ALLOCATION METHOD AND APPARATUS FOR SYSTEM ACCESS**
RESSOURCENZUWEISUNGSVERFAHREN UND VORRICHTUNG FÜR SYSTEMZUGANG
PROCÉDÉ ET APPAREIL D'ATTRIBUTION DE RESSOURCES POUR UN SYSTÈME D'ACCÈS

(30) Priority: 19.02.2016 CN 201610095289
(43) Date of publication of application: 26.12.2018
(73) Proprietor: G+ Communications LLC, Lewes, DE 19958 (US)
(72) Inventor: YAN, Xiao, Shenzhen, Guangdong 518057 (CN); HAO, Peng, Shenzhen, Guangdong 518057 (CN); LI, Jian, Shenzhen, Guangdong 518057 (CN); LU, Haitao, Shenzhen, Guangdong 518057 (CN); XUE, Yan, Shenzhen, Guangdong 518057 (CN); ZHANG, Junfeng, Shenzhen, Guangdong 518057 (CN)
(74) Representative: Carpmaels & Ransford LLP
(86) International application number: PCT/CN2017/073930
(87) International publication number: WO 2017/140264

(56) References cited:
- EP-A1- 1 954 081
- EP-A1- 3 255 910
- EP-A1- 3 375 243
- WO-A1-2015/039870
- WO-A1-2015/088264
- WO-A1-2015/196387
- CN-A- 101 754 054
- CN-A- 105 307 259
- CN-A- 106 332 298
- US-A1- 2015 020 157
- US-A1- 2016 323 916

## Description

### TECHNICAL FIELD

This application relates to, but is not limited to, the field of radio communications, and in particularly, to a resource allocation method and apparatus for system access.

### BACKGROUND

Rapid development of the mobile Internet has led to an explosive growth of radio data traffics. Novel services and applications such as the Internet of Things, machine to machine communications, Internet of Vehicles and high-reliability communications have placed higher demands on wireless communications in terms of delay and reliability. In response to these challenges, academia and industry have proposed the International Mobile Telecommunications (IMT)-2020 program to study the fifth-generation mobile communication technology, that is, 5G (5-Generation). 5G will greatly improve the performance of current Long Term Evolution (LTE) systems in terms of latency, capacity, reliability, flexibility, energy consumption and the like.

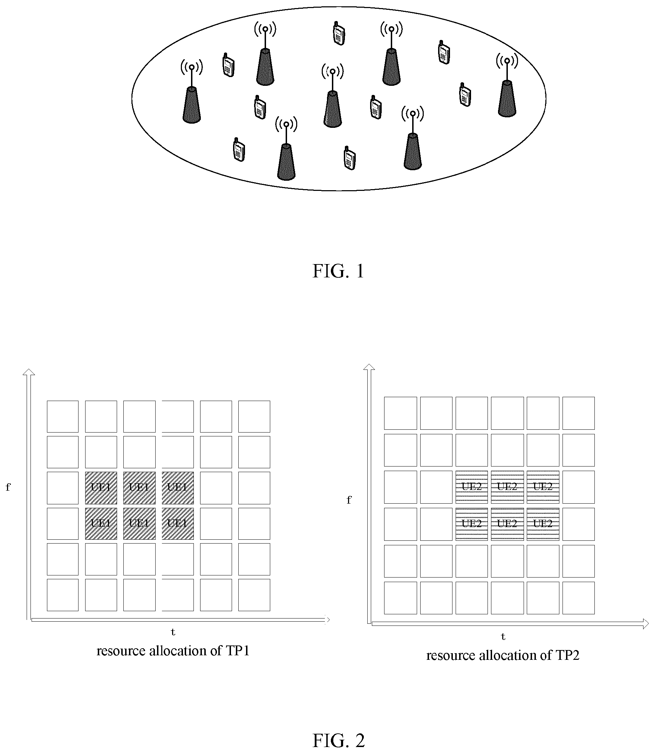

5G proposed a need to increase the capacity of hotspots by 1000 times compared with 4G. The capacity is increased mainly by three ways of improving frequency efficiency, increasing spectrum and densely deploying cells. At present, the single-link spectral efficiency is already close to the theoretical limit, and the globally unified 5G spectrum allocation has not yet reached a consensus. Therefore, the increase in 5G capacity will largely depend on dense cell deployment. It is in this context that an Ultra Dense Network (UDN) is proposed, which may be regarded as a further evolution of a Small Cell enhancement technology. In the UDN, as shown in FIG. 1, the density of Transmission Points (TPs) will be further increased, and the coverage of the TP will be further reduced (dozens of meters or even tens of meters). Each TP may only serve one or more UEs.

Academia and industry generally believe that UE-centered access will be adopted in the UDN. The traditional network access is TP-centered. The TP needs to transmit common signals such as a synchronization signal and a pilot signal in dense periods to ensure that a terminal may discover the TP. The transmission of these signals consumes a lot of energy and affects the energy efficiency of a system. Meanwhile, the transmission of the common signals will also cause interference to the service transmission of neighbor cells. The TPs in the UDN are dense, with small station spacing, so the problems such as energy consumption and interference of the TP-centered access are worse. The core idea of the UE-centered access is to let the TPs discover UE, so that periodic transmission of the synchronization signals and the pilot signals by the TPs is avoided, the energy is saved and the interference is reduced. At the same time, the UE-centered access allows the UE to participate in the selection of a service TP, which is conducive to improving the service quality. Finally, the UE-centered access also conforms to scenario characteristics of small station spacing and frequent switching in the UDN.

The UE-centered access may be roughly described as the following process. When being idle, a few representative TPs broadcast system information and the like, and most of TPs are in a sleep or off state to save the energy, and only wake up at a specific time to receive access requests from the UEs. When the UEs need to access the system, the UEs firstly transmit the access requests (messages 1, Msgl), which are generally transmitted in a contention manner, that is, multiple UEs randomly select resources in a resource pool to transmit the access requests. After receiving the access requests from the UEs, the TPs firstly determine whether they can serve the UEs or not. If the TPs can serve the UEs, the TPs transmit access request responses (messages 2, Msg2) to the UEs. TPs are dense in the UDN, and the UE typically receives the access request responses from multiple TPs. The terminal selects an appropriate TP to serve itself according to the received access request responses and the information of the TPs, and transmits information (a message 3, Msg3) to the TP. After receiving the message, the TP transmits a message response (a message 4, Msg4) to the UEs.

In the above process, the resource for transmitting the Msg3 is calculated by the UE through some configuration information or indicated by the TP in the Msg2. If the resources for transmitting Msg3 allocated by neighbor TPs for different UEs are in conflict, serious interference may occur between the Msg3 of different UEs, which affects the reception. FIG. 2 shows an example of a Msg3 resource conflict. Time-frequency resources allocated by two TPs for two UEs partially overlap, which may cause that the two Msg3 are not received correctly. Meanwhile, if two UEs use the same random access resource and select the same service TP, they will use the same resource to transmit the Msg3. At this time, the service TP can only identify the Msg3 of one UE, and another UE needs to re-initiate a random access procedure, which introduces an additional access delay. Further relevant technologies are also known from WO 2015/039870 A1 (SONY CORP [JP]; SONY EUROPE LTD [GB]) 26 March 2015 (2015-03-26), which relates to a communications device is configured to transmit data to a mobile communications network, WO 2015/088264 A1 (LG ELECTRONICS INC) 18 June 2015 (2015-06-18); & US 2016/323916 A1 (LEE EUNJONG [KR] ET AL) 3 November 2016 (2016-11 -03), which relates to a method for performing a random access procedure by a user equipment in a network, and US 2015/020157 A1 (KIM SANG-JIN [KR] ET AL) 15 January 2015 (2015-01-15), which relates to a multicell access method using beamforming in a wireless communication system.

### SUMMARY

The following is an overview of a subject matter detailed in this application. This summary is not intended to limit a protective scope of the claims. The feature of the method and apparatus according to the present invention are defined in the independent claims. Further improvements are provided in the dependent claims.

This application provides a resource allocation method and apparatus for system access, which may prevent Msg3 resources corresponding to UEs using the same random access resource from conflicting with each other.

A technical solution adopted by an embodiment of the present invention is as follows.

A resource allocation method for system access is applied to a terminal, and includes:
transmitting an access request;
receiving an access request response transmitted by one or more transmission points (TPs); and
determining, according to the access request response, a radio resource range of a message resource set occupied by transmitting a communication message, and occupying the radio resource range to transmit the communication message to the TP corresponding to the radio resource range.

In an embodiment, the determining a radio resource range of a message resource set occupied by transmitting a communication message includes:
determining the radio resource range according to a correspondence between the radio resource range and the access request, wherein the radio resource range has a mapping relationship with the at least one TP of the one or more TPs corresponding to the access request, and the message resource set has a mapping relationship with an access request response window or the access request response, wherein the access request response window is a time window, and wherein a time interval between time of transmitting the access request and the time window is of a preset length; or indication information of the access request response, wherein determining the radio resource range according to indication information of the access request response comprises determining the radio resource range according to position information of a radio resource range in the message resource set indicated by the access request response.

In an embodiment, the access request includes identification information, and the identification information includes time-frequency resource information and a preamble sequence index.

In an embodiment, the correspondence between the radio resource range and the access request includes:
radio resource ranges corresponding to access requests, which have different identification information or the identification information of which are different after being transformed, do not overlap each other and belong to the same message resource set.

In an embodiment, that the radio resource range has a mapping relationship with the TP corresponding to the access request includes:
radio resource ranges corresponding to TPs which have different indexes or the indexes of which are different after being transformed do not overlap each other and belong to a same message resource set.

In an embodiment, the determining the radio resource range according to indication information of the access request response includes:
determining the radio resource range according to position information of the radio resource range in the message resource set indicated by the access request response.

In an embodiment, that the message resource set has a mapping relationship with the access request response window includes:

the radio resource ranges corresponding to access request responses within a same access request response window belong to a same message resource set, and message resource sets corresponding to different access request response windows do not overlap each other.

In an embodiment, that the message resource set has a mapping relationship with the access request response includes:
access request responses transmitted at the same time correspond to a same message resource set, and message resource sets corresponding to access request responses transmitted at different times do not overlap each other.

In an embodiment, a time-frequency position of the message resource set is statically or dynamically configured by a system.

In an embodiment, a time interval from an upper time domain boundary of the access request response window to a lower time domain boundary of the corresponding message resource set is greater than or equal to a first threshold value.

In an embodiment, a time interval from a receiving time of the access request response to a lower time domain boundary of the corresponding message resource set is greater than or equal to a second threshold value; or
the radio resource range corresponding to the access request response is located within a message resource set, where a time interval between a lower time domain boundary of the message resource set and a transmitting time of the access request is minimum and greater than a third threshold.

In an embodiment, the determining, according to the access request response, the radio resource range of the message resource set occupied by transmitting a communication message includes:
determining, according to an indication of the access request response, a message resource for transmitting the communication message, or determining, in the radio resource range corresponding to the access request response, a message resource for transmitting the communication message;
or determining, according to frequency-domain position information indicated in the access request response, a time-frequency resource for transmitting the communication message; or determining a resource group from a plurality of time-frequency resource blocks in the radio resource range corresponding to the access request response, and selecting a time-frequency resource from the resource group for transmitting the communication message according to the indication of the access request response.

An embodiment of the present invention further provides a resource allocation apparatus for system access, which is disposed in a terminal, and includes: a transmission module, a reception module, and a processing module.

The transmission module is configured to transmit an access request;

The reception module is configured to receive an access request response transmitted by one or more TPs.

The processing module is configured to determine, according to the access request response, a radio resource range of a message resource set occupied by transmitting a communication message, and occupy the radio resource range to transmit the communication message to the TP corresponding to the radio resource range.

In an embodiment, the processing module is configured to:
determine the radio resource range according to a correspondence between the radio resource range wherein the radio resource range has a mapping relationship with the at least one TP of the one or more TPs corresponding to the access request, and the message resource set has a mapping relationship with an access request response window or the access request response, wherein the access request response window is a time window, and wherein a time interval between time of transmitting the access request and the time window is of a preset length, orindication information of the access request response, wherein the processing module is configured to determine the radio resource range according to position information of a radio resource range indicated by the access request response in the message resource set.

In an embodiment, the processing module is configured to:
determine the radio resource range according to position information of the radio resource range in the message resource set indicated by the access request response.

In an embodiment, the processing module is configured to:
determine, according to an indication of the access request response, a message resource for transmitting the communication message, or determine, in the radio resource range corresponding to the access request response, a message resource for transmitting the communication message;
or determine, according to frequency-domain position information indicated in the access request response, a time-frequency resource for transmitting the communication message; or determine a resource group from a plurality of time-frequency resource blocks included in the radio resource range corresponding to the access request response, and select a time-frequency resource from the resource group for transmitting the communication message according to the indication of the access request response.

The embodiments of the present invention have the following beneficial effects:

With the method and the apparatus of the embodiments of the present invention, in a UE-centered access process in an ultra-dense network, Msg3 transmitted by different UEs do not interfere with each other, and the conflict of the Msg3 of the UEs using the same preamble may be reduced.

Other aspects will be apparent upon reading and understanding accompanying drawings and detailed description.

### BRIEF DESCRIPTION OF DRAWINGS

FIG. 1 is a schematic diagram of a UDN scenario;
FIG. 2 is a schematic diagram of mutual interference of Msg3 of different UEs;
FIG. 3 is a flowchart of a resource allocation method for system access according to an embodiment of the present invention;
FIG. 4 is a schematic diagram showing a structure of a resource allocation apparatus for system access according to an embodiment of the present invention;
FIG. 5 is a diagram showing a mapping relationship between Msg2 windows andMsg3 resource sets according to an embodiment of the present invention;
FIG. 6 is a diagram showing time domain arrangement of Msg2 windows according to an embodiment of the present invention;
FIG. 7 is a diagram showing a mapping relationship between receiving times ofMsg2 and Msg3 resource sets according to an embodiment of the present invention;
FIG. 8 is a diagram showing pre-configured Msg3 resource sets according to an embodiment of the present invention;
FIG. 9 is a diagram showing a definition of random access resources according to an embodiment of the present invention;
FIG. 10 is a diagram showing mapping between random access sequence numbers and Msg3 resource ranges according to an embodiment of the present invention;
FIG. 11 is diagrams showing mapping between Msg3 resource ranges and TPs having a same random access sequence number and mapping between Msg3 resource ranges and TPs having different random access sequence numbers according to an embodiment of the present invention;
FIG. 12 is a schematic diagram showing continuous mapping and discontinuous mapping between indexes of TPs and Msg3 resource ranges according to an embodiment of the present invention;
FIG. 13 is a schematic diagram of determining a Msg3 resource jointly by mapping and signaling according to an embodiment of the present invention;
FIG. 14 is a schematic diagram of directly specifying a Msg3 resource by signaling according to an embodiment of the present invention;
FIG. 15 is a diagram showing a random access conflict resolution mechanism in an LTE according to an embodiment of the present invention; and
FIG. 16 is a diagram showing a conflict resolution mechanism based on randomly selecting Msg3 resources according to an embodiment of the present invention.

### DETAILED DESCRIPTION

Embodiments of the present invention are described below with reference to accompanying drawings. It should be noted that embodiments and features in the embodiments in the present application may be arbitrarily combined with each other without conflict.

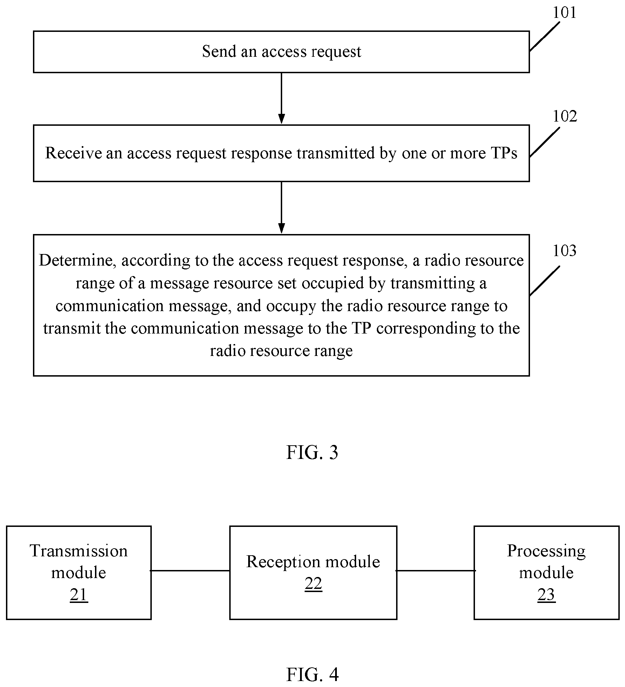

As shown in FIG. 3, an embodiment of the present invention provides a resource allocation method for system access. The method is applied to a terminal, and includes the following steps.

In step 101, an access request is transmitted;

In step 102, an access request response transmitted by one or more TPs is received.

In step 103, a radio resource range of a message resource set occupied by transmitting a communication message is determined according to the access request response, and the communication message is transmitted to the TP corresponding to the radio resource range by occupying the radio resource range.

The process of determining a radio resource range of a message resource set occupied by transmitting a communication message is as follows.

The radio resource range is determined according to a correspondence between the radio resource range and the access request.

Alternatively, the radio resource range is determined according to indication information of the access request response.

The radio resource range of transmitting the communication message by a terminal belongs to a message resource set, and the radio resource range has a mapping relationship with the access request or is indicated by the access request response.

The correspondence between the radio resource range and the transmission point (TP) includes:
the radio resource range has a mapping relationship with the TP corresponding to the access request; and
the message resource set has a mapping relationship with an access request response window or the access request response. The access request response window is a time window, and a time interval between time of transmitting the access request and the time window is of a preset length.

The message resource set is a predefined resource group, and a time-frequency position of the message resource set is statically or dynamically configured by the system.

The access request includes identification information, and the identification information includes time-frequency resource information and a preamble sequence index.

The access request is a preamble sequence transmitted on a certain time-frequency resource. The time-frequency resource used by transmitting the access request and the preamble sequence index define an access request together, which are called identification information of the access request.

The correspondence between the radio resource range and the access request includes:
radio resource ranges corresponding to access requests, which have different identification information or the identification information of which are different after being transformed, do not overlap each other and belong to the same message resource set.

The mapping relationship between the radio resource ranges and the TPs corresponding to the access request includes:
radio resource ranges corresponding to TPs, which have different indexes or the indexes of which are different after being transformed, do not overlap each other and belong to the same message resource set.

The TPs each have an TP index, and radio resource ranges corresponding to TPs, which have different indexes or the indexes of which are different after being transformed, do not overlap each other and belong to the same message resource set.

The process of determining the radio resource range according to the indication information of the access request response is as follows.

The radio resource range according to position information of the radio resource range in the message resource set indicated by the access request response.

The mapping relationship between the message resource sets and the access request response windows includes:
the radio resource ranges corresponding to the access request responses within a same access request response window belong to a same message resource set, and the message resource sets corresponding to different access request response windows do not overlap each other The mapping relationship between the message resource sets and the access request responses includes:
the access request responses transmitted at the same time correspond to a same message resource set, and the message resource sets corresponding to the access request responses transmitted at different times do not overlap each other.

A time interval from an upper time domain boundary of the access request response window to a lower time domain boundary of the corresponding message resource set is greater than or equal to a first threshold value.

A time interval from a receiving time of the access request response to a lower time domain boundary of the corresponding message resource set is greater than or equal to a second threshold value.

Alternatively, the radio resource range corresponding to the access request response is located within the message resource set a time interval between the lower time domain boundary of which and a transmitting time of the access request is minimum and greater than a third threshold.

The process of determining the radio resource range of the message resource set occupied by transmitting a communication message according to the access request response is as follows.

A message resource for transmitting the communication message is determined according to an indication of the access request response, or the message resource for transmitting the communication message is determined in the radio resource range corresponding to the access request response.

Alternatively, a time-frequency resource for transmitting the communication message is determined according to frequency-domain position information indicated in the access request response; or a resource group is determined from a plurality of time-frequency resource blocks in the radio resource range corresponding to the access request response, and a time-frequency resource is selected from the resource group for transmitting the communication message according to the indication of the access request response.

After transmitting the message, the terminal receives a message response. The access request response includes a first type terminal identifier, and the message includes a second type terminal identifier, and the message response includes only the second type terminal identifier or includes both the second type terminal identifier and the first type terminal identifier.

If the terminal receives the message response including only the second type terminal identifier, and the second type terminal identifier is the same as a second type terminal identifier of the terminal itself, the terminal uses the first type terminal identifier included in the access request response.

If the terminal receives the message response including the second type terminal identifier and the first type terminal identifier, and the second type terminal identifier in the message response is the same as the second type terminal identifier of the terminal itself, the terminal uses the first type terminal identifier in the message.

The method proposed by the embodiment of the present invention has the following advantages.
1. Different UEs transmit Msg3 without mutual interference.
   A position of the Msg3 resource is defined in a three-level manner. First, a resource set for transmitting the Msg3 is specified by mapping or configuration, which is called a Msg3 resource set. Then, a position of the Msg3 resource range in the Msg3 resource set is determined by the number of the random access sequence or the index of the TP. Finally, the Msg2 specifies a relative position of the Msg3 resource in the resource range.
   By means of the three-tier manner, it can be ensured that the resources for transmitting the Msg3 by different UEs do not overlap each other (i.e., do not interfere with each other), so that a UE-centered initial access process proceeds smoothly.
2. The conflict of the Msg3 using the same random access preamble is reduced.
   In an existing LTE system, if multiple UEs use the same preamble sequence to initiate random access on the same time-frequency resource, only one resource for transmitting the Msg3 is allocated to these UEs in the Msg2. The Msg3 transmitted by these UEs will interfere with each other. The TP usually may only demodulate the Msg3 with the best signal quality and respond to it in Msg4. The remaining UEs re-initiate the random access procedure and introduce additional random access delays.
   In this solution, a plurality of resources for transmitting the Msg3 are allocated to the UE in the Msg2, the UE randomly select a resource for transmitting the Msg3. Even if multiple UEs use the same random access preamble sequence and receive the same Msg2, it is also possible that a base station can distinguish these Msg3 since different resources are selected by the multiple UEs to transmit the Msg3. Cell Radio Network Temmporary Identifies (CRNTIs) are assigned to the UEs in the Msg4. These UEs do not need to re-initiate the random access requests, thereby shortening the random access delay.
3. There is a good compatibility with existing standards, which is conducive to smooth evolution.
   In a process of designing this solution, similar elements in the LTE random access process are retained as much as possible to facilitate the evolution. For example, a transmission mode and an information payload of the random access request, a time sequence relationship of the messages in the random access, and contents of the Msg2 and the Msg3 are completely consistent with those of the LTE. Only the contents of the Msg4 are slightly changed.
4. Signaling resources are saved.

The position of the Msg3 resource is specified in a three-level manner. In the Msg2, it is necessary to only specify a relative position of the resource for transmitting the Msg3 with respect to the corresponding resource range rather than an absolute time-frequency position of the resource for transmitting the Msg3. In this way, the number of bits in signaling used to indicate resource allocation may be reduced.

As shown in FIG. 4, an embodiment of the present invention further provides a resource allocation apparatus for system access, which is disposed in a terminal, and includes:
a transmission module 21, which is configured to transmit an access request;
a reception module 22, which is configured to receive an access request response transmitted by one or more TPs; and
a processing module 23, which is configured to determine, according to the access request response, a radio resource range of a message resource set occupied by transmitting a communication message, and occupy the radio resource range to transmit the communication message to the TP corresponding to the radio resource range.

The processing module 23 is configured to:
determine the radio resource range according to a correspondence between the radio resource range and the access request; or determine the radio resource range according to indication information of the access request response.

The processing module 23 is configured to:
determine the radio resource range according to position information of the radio resource range indicated by the access request response in the message resource set.

The processing module 23 is configured to:
determine, according to an indication of the access request response, a message resource for transmitting the communication message, or determine, in a radio resource range corresponding to the access request response, a message resource for transmitting the communication message;
or determine, according to frequency-domain position information indicated in the access request response, a time-frequency resource for transmitting the communication message; or determine a resource group from a plurality of time-frequency resource blocks included in the radio resource range corresponding to the access request response, and select a time-frequency resource from the resource group for transmitting the communication message according to the indication of the access request response.

The implementation of the technical solution will be further described in detail below with reference to the accompanying drawings:

### First embodiment

A mapping relationship between a Msg2 window and a Msg3 resource range will be explained.

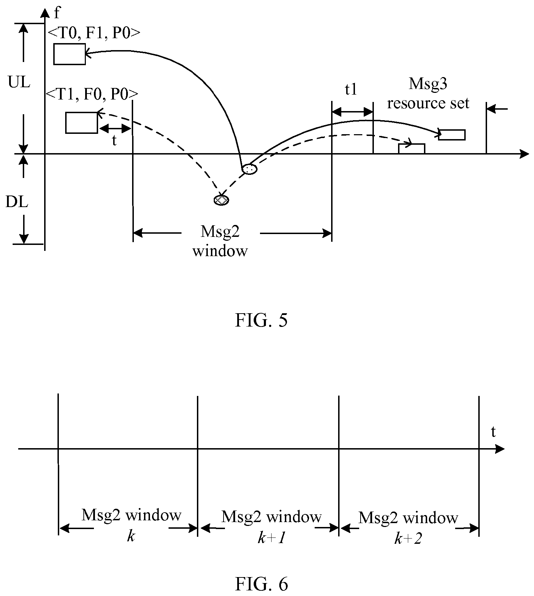

As shown in FIG. 5, the transmissions of four messages related to random access follow a certain time sequence relationship, so as to allow sufficient time for each processing. After transmitting an access request at a time t₀, UE receives an access request response within a time window [t₀+t, t₀+t+w_{size}], which is called an access request response window (Msg2 window). An interval t in a time domain between the access request and the access request window is to give a TP sufficient time to demodulate a random access preamble and prepare a response. There is also a time interval t₁ between the Msg2 window and a Msg3 resource set, so that sufficient time is given for the UE to decode the Msg2 and prepare the Msg3. Two time intervals t and t₁ may be defined by a protocol and fixed, or may be dynamically configured by a system.

As shown in FIG. 6, a plurality of Msg2 windows which do not overlap each other cover the entire timeline. A mapping manner from the Msg2 windows to the Msg3 resource set is as follows: Msg3 resources corresponding to Msg2 falling in the same Msg2 window are located in the same Msg3 resource set, and Msg3 resources corresponding to Msg2 falling in different Msg2 windows fall in different Msg3 resource sets. As shown in FIG. 5, Msg2 corresponding to access requests transmitted at two different moments fall in the same Msg2 window, and Msg3 resources corresponding to the access requests also belong to the same set.

### Second embodiment

A mapping relationship between receiving times of Msg2 and Msg3 resource ranges will be explained.

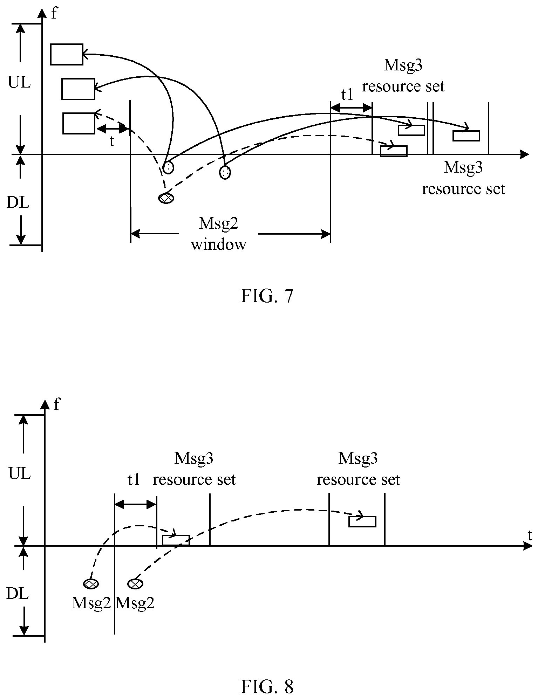

The mapping relationship between the receiving times of the Msg2 and the Msg3 resource sets is shown in FIG. 7. The Msg2 received at the same time correspond to the same Msg3 resource set, and the Msg3 resource sets corresponding to the Msg2 received at different times do not overlap each other. In FIG. 7, two random access requests are transmitted simultaneously, but receiving times of their corresponding Msg2 are different, so that the Msg3 resources belong to different sets.

In this mapping manner, it may be necessary to limit the time when TPs transmit the Msg2 so as to limit the number of Msg3 resource sets, and ensure that each Msg3 resource set has a sufficient size. If the TPs are allowed to freely transmit the Msg2 at each time (subframe), in order to ensure a correspondence between the Msg3 resource sets and the receiving times of the Msg2, a time domain size of each Msg3 resource set will be only one subframe. A smaller Msg3 resource set affects the degree of freedom of subsequent processing such as scheduling.

The mapping relationship between the receiving times of the Msg2 and the Msg3 resource sets may be specified in various ways. For example, a time interval between the Msg3 resource range and the Msg2 may be specified as m subframes (m is greater than the minimum time required for a terminal to prepare the Msg2), and the duration of each Msg3 resource set in the time domain is an interval of two adjacent time points which are feasible for transmitting the Msg2. In this way, it may be ensured that different Msg3 sets do not overlap each other. Alternatively, a frequency domain mapping manner may be used, the Msg3 resource sets corresponding to the Msg2 in the same Msg2 window belong to the same time domain range, and the Msg3 resource sets corresponding to the Msg2 received at different times are distributed on subcarriers of different frequencies.

### Third embodiment

A pre-configured Msg3 resource set will be explained.

The pre-configured Msg3 resource set means that a system configures multiple Msg3 resource sets in a static or dynamic manner. The static manner means that the setting of the Msg3 resource set is specified in a protocol, and a time-frequency position, a time density, and a size of the Msg3 resource set are fixed, and are the same for all UEs and TPs. The dynamic manner means that the protocol provides system information or signaling for configuring the time-frequency position, the time density, and the size of each Msg3 resource set. After receiving the corresponding information, the UE may obtain a configuration of the Msg3 resource set. The advantage of the dynamic manner is that the configuration of the Msg3 resource set may be adjusted according to the number of accessed UEs, delay requirements, and other parameters, which is beneficial to improve the efficiency.

When the Msg3 resource set is pre-configured, a time sequence relationship between receiving times of the Msg2 and the Msg3 resource sets follows the principle of proximity, that is, after completing the preparation of the Msg2, the UE selects the nearest Msg3 resource set in the time domain to transmit the Msg3. In FIG. 8, after receiving the first Msg2, the UE has sufficient time to prepare the Msg3 before the first Msg3 resource set arrives, so that the corresponding Msg3 is transmitted in the first Msg3 resource set. For the second Msg2, the time to the first Msg3 resource set is too short, and there is insufficient time to prepare a Msg3, so the Msg3 is transmitted in the next Msg3 resource set.

### Fourth embodiment

A mapping relationship between Msg3 resource ranges and indexes of random access requests will be explained.

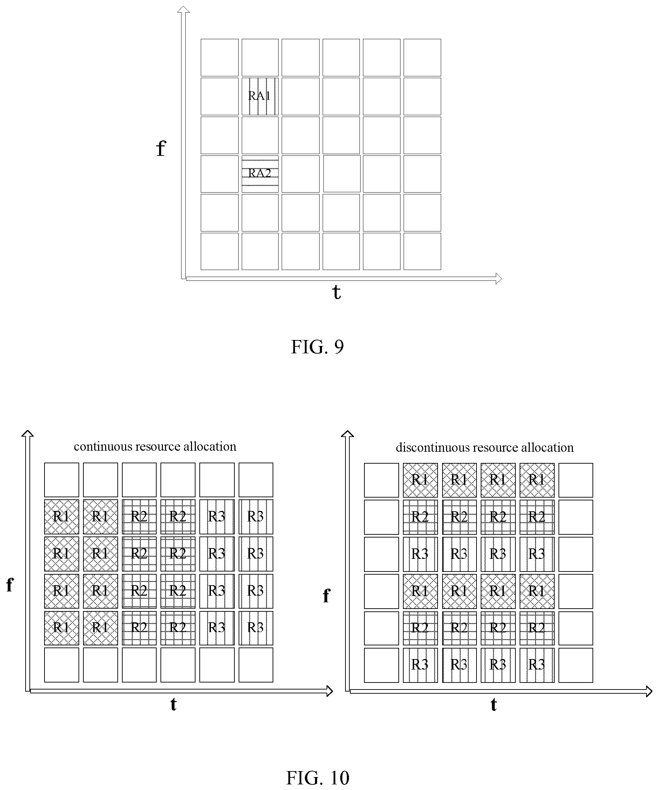

A random access request is a random preamble sequence transmitted on a certain radio resource. Generally, UE transmits a specific random access preamble only on one random access resource (multiple random access procedures are not initiated simultaneously). FIG. 9 is a schematic diagram showing random access resources in an Orthogonal Frequency Division Multiplexing (OFDM) system. In FIG. 9, there are two time-frequency resources RA1 and RA2 for random access. On these two resources, two different UEs may transmit the random access requests by using random access preamble sequences with the same index. These two random access requests should be treated as two different random access requests because TPs may distinguish them by time-frequency resources for transmitting the random access preambles. However, the TPs may not distinguish random access requests transmitted by different UEs on the same time-frequency resources such as the RA1 by using the same random access sequence. Accordingly, the random access requests identifiable to the TPs are retransmitted and are completely defined by a triplet group (tᵢ, fᵢ, pᵢ), where tᵢ denotes the transmission time of the random access request, fᵢ denotes a lowest-frequency subcarrier used by the random access request, and pᵢ denotes an index of the preamble sequence used by the random access request. In high-frequency communications, the same TP may be divided into different sectors due to different antenna orientations, so that a tag of the random access request may be extended to a quadruple group including airspace resources in the future. A plurality of methods may be defined to map a tuple that marks the random access request to a real number, and it is ensured that the real numbers obtained by mapping of different tuples are different, and the real number is referred to as no random access sequence number, and is recorded as Rᵢ.

By means of the methods set forth in the first embodiment through the third embodiment, the Msg3 resource set has been determined, but the Msg3 resource set has a larger Msg3 range, and the position of a resource corresponding to a certain Msg3 in the Msg3 resource set may be further determined. At the same time, it is also necessary to ensure that the Msg3 resources of different UEs do not conflict with each other. A method for ensuring that resources of transmitting the Msg3 by different UEs do not conflict each other is to allocate non-overlapping Msg3 resource ranges to random access requests which have different sequence numbers and are mapped to the same Msg3 resource set. The Msg3 resource ranges corresponding to the random access requests of the same sequence number may be continuous or discontinuous in the resource set. FIG. 10 shows an example of continuous allocation and an example of discontinuous allocation. It is assumed that three random accesses with different sequence numbers are mapped to the same Msg3 resource set. FIG. 10 shows a continuous resource range on the left and a discontinuous resource range on the right.

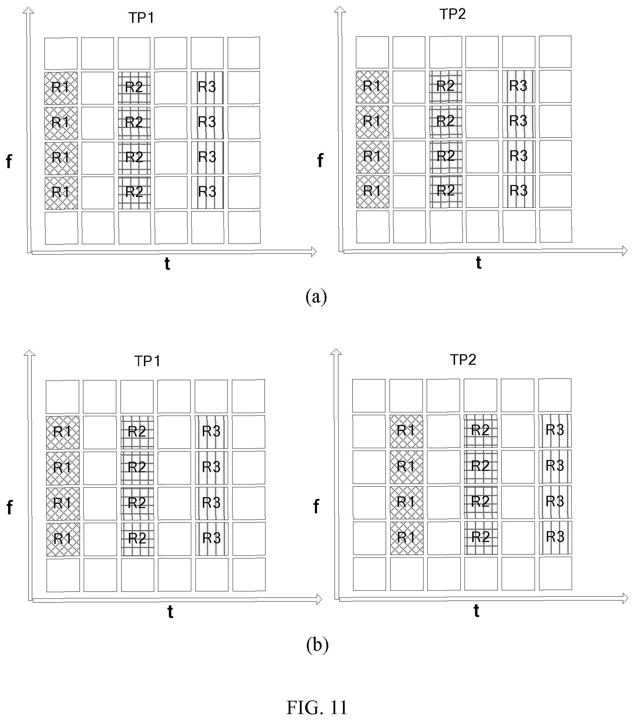

The Msg3 resource range allocated for the same random access sequence number by different TPs, may be consistent or inconsistent, but it is necessary to ensure that the Msg3 resource ranges allocated by different TPs to different random access sequence numbers do not overlap each other. FIG. 11 shows examples of the same random access sequence number and of different random access sequence numbers. FIG. 11(a) shows a case where different TPs use a same mapping between the random access sequence numbers and the Msg3 resource ranges. In this case, the TPs allocates a same Msg3 resource range for the same random access sequence number. FIG. 11(b) shows a case where different TPs use different mappings between the random access numbers and the Msg3 resource ranges. Although the Msg3 resource ranges allocated by different TPs to the same random access sequence are different, the Msg3 resource ranges allocated to the random access requests of different sequence numbers still do not overlap, and it is possible to ensure that the Msg3 of different UEs do not interfere with each other.

Since the size of the Msg3 resource set is limited, the number of the Msg3 mapped to the same Msg3 resource set may be large (that is, the quantity of sequence numbers of the random access requests is large). In this way, it is impossible to ensure that the Msg3 resource ranges corresponding to random access requests of different sequence numbers do not overlap each other (the quantity of the sequence numbers of the random access requests is greater than the quantity of available resources in the Msg3 resource set). In this case, the quantity of the sequence numbers of the random access requests may be compressed by a certain transform, such as a modulo operation. The quantity of the transformed sequence numbers of the random access requests is small, so that it is possible to ensure that the Msg3 resource ranges corresponding to the random access requests of different sequence numbers do not overlap each other.

The Msg3 resource range corresponding to the sequence number of the access request is only a tag, and are not necessarily used to transmit the Msg3. For example, if the TPs do not receive a random access request of a certain sequence number, or have decided not to provide a subsequent service to the random access request of the certain sequence number, the Msg3 resource range corresponding to the random access request of the certain sequence number may also be used for other purposes. The Msg3 resource range marked with a specific random access sequence number may also be larger than the resource required for transmitting a single Msg3, the TP may select a part of the resource to be allocated to the UE, and the UE transmits the Msg3 on this part of the resource, and the rest part of resource is used for other purposes. The TP may also specify a subset of the Msg3 resource range for the UE, the UE randomly selects a part of the resources for transmitting the Msg3.

The mapping relationship between the random access sequence numbers and the Msg3 resource ranges may be determined by a protocol or configured dynamically. When the mapping relationship is determined by the protocol, the TP does not need to explicitly indicate the Msg3 resource range for the UE, and the UE may calculate the Msg3 resource range by itself. The TP only needs to indicate the relative position of the Msg3 resource in the Msg3 resource range. A system message, a control channel, and the like may also be used to notify the UE of the random access sequence number of the TP and a mapping rule of the Msg3 resource ranges, for example, the size of a modulus when the modulo operation is performed on the random access sequence numbers is set. Such a flexible performance adapts to the change in the number of the UEs over time.

### Fifth embodiment

A mapping relationship between Msg3 resource ranges and indexes of TPs will be explained.

In LTE and LTE-A systems, each TP has an index, which is also called a cell ID. There are 504 different values for the Cell ID in the LTE in total, three of which are carried by a sequence used by a primary synchronization signal (PSS), and the remaining 168 values are carried by a sequence used by a secondary synchronization signal (SSS). The Cell ID determines a position, a scrambling code and the like of a cell-specific reference signal (CRS) of a TP, and the cell IDs of the geographically neighbor cells are usually different so as to play a role in reducing the interference. In our solution, mutual interference between Msg3 of different UEs is avoided by allocating non-overlapping Msg3 resource ranges for the TPs with different indexes. The Msg3 resource ranges allocated to the same TP may or may not be continuous in the resource set.

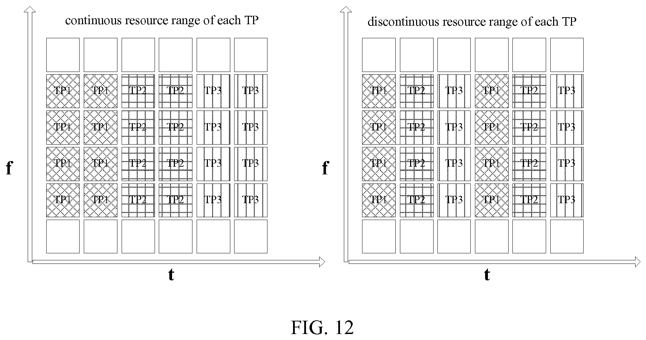

FIG. 12 shows examples showing continuous mapping and discontinuous mapping between indexes of TPs and Msg3 resource ranges. FIG. 12 shows an example in which Msg3 resource ranges allocated to the TPs are continuous on the left and an example in which Msg3 resource ranges allocated to the TPs are discontinuous on the right. In the two figures, the Msg3 resource ranges allocated to different TPs do not overlap each other. FIG. 12 only shows a case of the division of the Msg3 resource range of each TP based on time, alternatively, the division of Msg3 resource ranges of different TPs is based on frequency or based on both of the time and the frequency. Similar to division of the Msg3 resource ranges in the Msg3 resource set based on the random access sequence numbers, it is possible that the Msg3 resource set is small and the number of the indexes of the TPs is large, so that it is difficult to allocate non-overlapping Msg3 resource ranges to the TPs with different indexes. In fact, during the division of the Msg3 resource ranges, it is usually only necessary to ensure that the Msg3 resource ranges of the neighboring TPs that have strong mutual interference do not overlap each other. The non-overlapping principle may not be considered for TPs with largest distance and low interference. Accordingly, some transformation, for example, modulo operation may be performed on the indexes of the TPs, so as to narrow the range of the indexes of the TPs, and it is ensured that the non-overlapping Msg3 resource ranges may be allocated to the TPs with different indexes in the limited Msg3 resource set. By means of properly planning the indexes of the TPs, it is possible to that the indexes of the neighbor TPs are still different after being transformed, so as to avoid the interference.

Similar to the correspondence between the Msg3 resource ranges and the sequence numbers of the access requests, the Msg3 resource range is only a tag and is not necessarily used to transmit the Msg3. For example, if the TP does not receive the random access request for a period of time, the resources marked as a Msg3 resource range will not be used by its UE to transmit the Msg3, and the TPs may schedule other uplink transmissions on the resources marked as a Msg3 resource range. The Msg3 resource range may also be more than resources required for actually transmitting the Msg3, so as to provide the degree of freedom for the scheduling of the TPs. The TP may schedule the Msg3 transmission on some of the resources in the Msg3 resource range, and schedule other uplink transmissions on the remaining resources.

The mapping relationship between the indexes of the TPs and the Msg3 resource ranges has been determined. When the resource for the Msg3 is specified in the Msg2, an absolute position of the resource does not need to be specified, but a relative position with respect to a starting point of the resource range is specified. The number of bits of resource allocation signaling in the Msg2 may be reduced. The mapping relationship between the indexes of the TPs and the Msg3 resource ranges may be statically or dynamically configured. The static mapping is specified by the protocol and cannot be changed. The dynamic mapping may change the relevant parameters in the mapping through signaling to achieve the purpose of adapting the traffic and requirements. Although the sizes of the Msg3 resource ranges delineated for the TPs in the embodiment are the same, they are not necessarily to be the same. Msg3 resource ranges of different sizes may be delineated for different TPs according to load conditions. The mapping between the random access sequence numbers and the Msg3 resource ranges may ensure that the Msg3 corresponding to the random access requests with different sequence numbers do not interfere with each other, whereas the mapping relationship between the indexes of the TPs and the Msg3 resource ranges cannot ensure that. The mapping relationship between the indexes of the TPs and the Msg3 resource ranges may only ensure that the Msg3 of different TPs do not interfere with each other. In the same TP, orthogonal Msg3 resources need to be allocated to random access requests with different sequence numbers, so as to avoid interference within the same TP. However, this is a scheduling issue, which may be implemented in the TP.

### Sixth embodiment

Indicating the Msg3 resource range by signaling in the Msg2 will be explained.

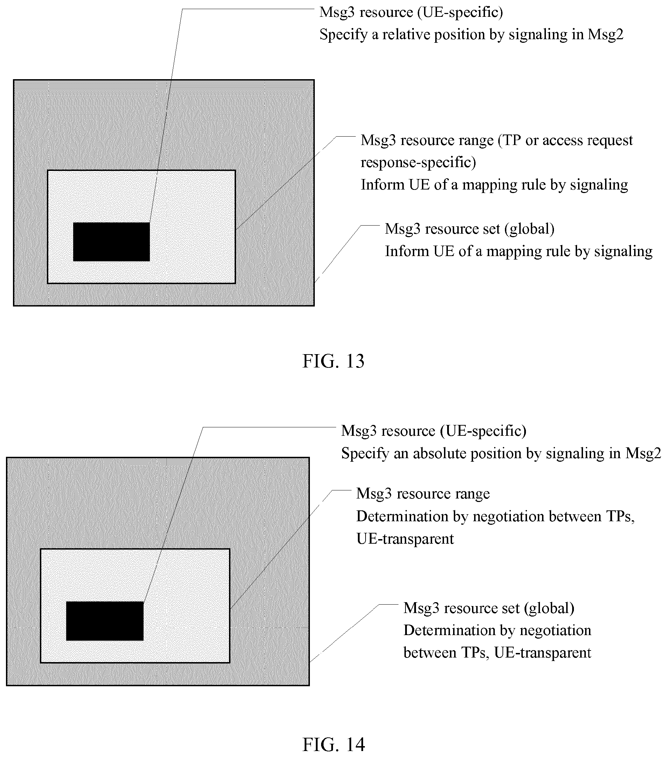

Among the methods discussed in the previous five embodiments, a process of determining a Msg3 resource has three steps, and the process is shown in FIG. 13. First, a position of a Msg3 resource set is determined by a time domain position of a Msg2 or pre-configured by a system. Then, a position of a Msg3 resource range in the resource set is determined by a sequence number of a random access request or an index of a destination TP. Finally, a relative position of the resource for transmitting the Msg3 in the resource range determined in the second step is indicated by signaling in the Msg2. Through these three steps, UE may determine a resource used to transmit the Msg3. Positions of the Msg3 resource set and the Msg3 resource range are calculated by the UE according to a protocol or by some system configurations, and the Msg2 may indicate a relative position of the Msg3 resource instead of an absolute position, so as to save the signaling overhead. At the same time, in the solution, the requirement on cooperation and communication between TPs is not high, a mapping manner between the Msg3 resource set and the Msg3 resource range is determined, and the TPs may avoid interference of Msg3without interaction. The time granularity of adjusting the mapping manner between the Msg3 resource set and the Msg3 resource range is large, so that the communication delay requirement between the TPs is low.

The interference of the Msg3 may be avoided by adopting a UE-transparent manner, but there are higher requirements for communication and cooperation between the TPs. FIG. 14 shows a possibility of this process. In this manner, the position of the Msg3 resource set and the position of the Msg3 resource range are the result of the negotiation between the TPs, which is not known by the UE. The negotiation between the TPs may be based on rules set in the above five embodiments, that is, a set of mapping rules is determined by the negotiation to determine the positions of the Msg3 resource set and the Msg3 resource range. A relatively free manner may be adopted, such as a manner of directly specifying the Msg3 resource range for each TP and the sequence number of the random access request. The UE is not informed of the result of the negotiation between the TPs, which only serves as a limitation on the Msg3 transmission scheduling in the TP. In this case, the absolute position of the resource for transmitting the Msg3 needs to be specified in the Msg2, and the signaling overhead is large. In a cloud radio access network (CRAN) architecture, schedulers of the TPs are concentrated in one processing capacity pool, interaction of the schedulers has a very low delay, so the CRAN has conditions for implementing this manner. Moreover, the incompatibility with current standards due to definition of behaviors of the UE in the standards may also be avoided.

### Seventh embodiment

Avoiding Msg3 conflicts will be explained.

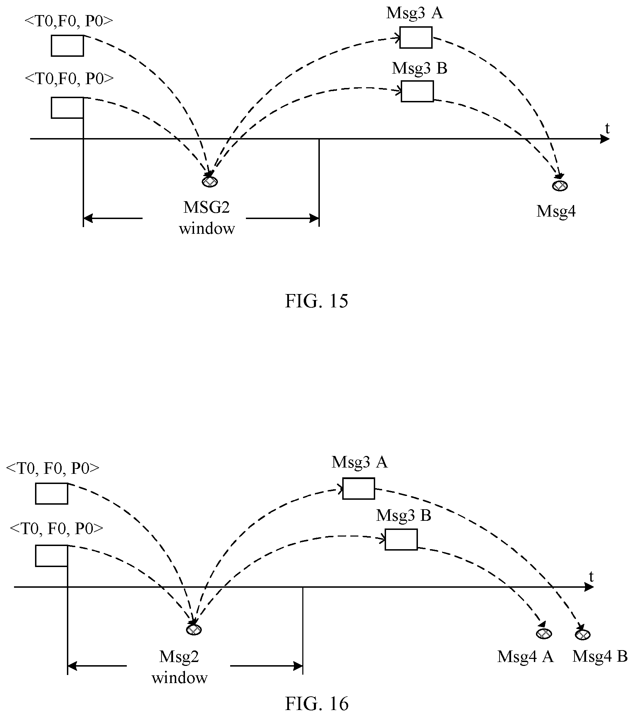

A conflict occurs when multiple UEs initiate random access requests by using the same random access preamble sequence on the same time-frequency resource. At present, LTE resolves the conflict in a Msg4. A general process is shown in FIG. 15. Multiple UEs select the same random access preamble sequence to transmit a Msg1 on the same time-frequency resource. TPs cannot distinguish these random access requests, so that only one temporary C-RNTI and one resource for transmitting the Msg3 are returned in the Msg2. These UEs will transmit their own NAS IDs (UE access destination numbers) and some other information on a Msg3 resource specified in the Msg2. Because these Msg3 completely overlap at a time-frequency position, the TP usually only demodulate one with the best signal-to-noise ratio. In the Msg4, the TP returns the NAS ID received in the Msg3. The UE compare the NAS ID with its own NAS ID. If the NAS ID is the same as its own NAS ID, the UE considers that this competition is won, and the temporary C-RNTI is upgraded to a C-RNTI to complete the random access procedure. If the NAS ID is different from its own NAS ID, the UE considers that the random access competition fails, and the random access procedure is re-initiated. It can be seen that in this process, the UE that fails the competition has a longer access delay because the random access procedure is re-initiated.

In this solution, the TP may specific, in the Msg2 and for the UE, multiple resources for transmitting Msg3, to solve the problem of delay of re-initiating the random access due to the random access conflict. The TP allocates a plurality of Msg3 resources to the UE in the Msg2, and the UE randomly selects one of the plurality of Msg3 resources to transmit the Msg3. For example, a frequency domain position and multiple subframes may be indicated in the Msg2, and each UE may randomly select one subframe to transmit the Msg3 at a specified frequency domain position, as shown in FIG. 16. Alternatively, multiple frequency domain positions may be specified on the same time domain position, and the UE randomly selects one from the multiple frequency domain positions to transmit the Msg3. Alternatively, multiple time-frequency positions may be specified from which the UE randomly selects one.

By randomly selecting the resources for transmitting Msg3 by the UEs, multiple Msg3 may be mutually staggered in probability, so that the TP may receive multiple Msg3 and know that the random access conflict occurs. After the conflict occurs, the TP need to select one of the conflicting UEs, the selected UE uses the temporary CRNTI allocated in the Msg2, and the TP reallocates CRNTIs to other UEs. A feasible mechanism is that after detecting multiple Msg3, the TP transmits multiple Msg4, which are located on different time-frequency resources to distinguish each other. For UE that uses the CRNTI allocated in the Msg2, the Msg4 transmitted to it only needs to include its NAS ID. For UE to which a new CRNTI is allocated, the Msg4 need to include both its NAS ID and the newly allocated CRNTI. UE that receives the Msg4 only including the NAS ID and not including the CRNTI, compares the NAS ID with its own NAS ID. If the NAS ID is the same as its own NAS ID, the temporary CRNTI is upgraded to the CRNTI. UE that receives the Msg4 including both a NAS ID and a CRNTI, if the NAS ID is the same as its own NAS ID, considers that the TP re-allocates the CRNTI for it, and uses the CRNTI in the Msg4 as its own CRNTI. UE that does not receive the Msg4 with its own NAS ID needs to re-initiate the random access procedure.

An embodiment of the present invention further provides a computer readable storage medium storing computer executable instructions. The computer executable instructions implements the resource allocation method for system access when being executed by a processor.

Those ordinarily skilled in the art will understand that all or a part of the above steps may be performed related hardware (for example, a processor) instructed by a program, and the program may be stored in a computer readable storage medium, such as a read only memory, a disk or an optical disk. All or a part of the steps of the above embodiments may also be implemented by using one or more integrated circuits. Correspondingly, each module/unit in the foregoing embodiments may be implemented in the form of hardware, for example, the corresponding function of each module/unit is implemented by an integrated circuit; alternatively, each module/unit may be implemented in the form of a software function module, for example, the corresponding function of each module/unit may be implemented by executing a program/instruction stored in a memory by a processor. Embodiments of the present invention are not limited to any specific form of combination of hardware and software.

Although implementation manners disclosed in the embodiments of the present invention are as described above, the content thereof is only used to facilitate understanding of the technical solutions of the embodiments of the present invention, and is not intended to limit this application. Any modification or variation in the form and details of the implementation may be made by those skilled in the art without departing from a core technical solution disclosed by this application. However, a protective scope defined by this application is subject to a scope defined by the appended claims.

### INDUSTRIAL APPLICATION

With the method and the apparatus of the embodiments of the present invention, in a UE-centered access process in an ultra-dense network, Msg3 transmitted by different UEs do not interfere with each other, and the conflict of the Msg3 of the UEs using the same preamble may be reduced.

## Claims

1. A resource allocation method for system access, the method being applied to a terminal and comprising:
transmitting (101) an access request;
receiving (102) an access request response transmitted by one or more transmission points, TPs; and
determining (103), according to the access request response, a radio resource range of a message resource set to be occupied for subsequent transmission of a communication message, and occupying the radio resource range to transmit the communication message to at least one TP of the one or more TPs corresponding to the radio resource range, wherein determining the radio resource range of a message resource set includes determining the radio resource range according to:
a correspondence between the radio resource range and the access request, wherein the radio resource range has a mapping relationship with the at least one TP of the one or more TPs corresponding to the access request, and the message resource set has a mapping relationship with an access request response window or the access request response, wherein the access request response window is a time window, and wherein a time interval between time of transmitting the access request and the time window is of a preset length; or
indication information of the access request response, wherein determining the radio resource range according to indication information of the access request response comprises determining the radio resource range according to position information of a radio resource range in the message resource set indicated by the access request response.

2. The method according to claim 1, wherein the access request comprises identification information, and the identification information comprises time-frequency resource information and a preamble sequence index.

3. The method according to claim 2, wherein the correspondence between the radio resource range and the access request comprises:
radio resource ranges corresponding to the access requests, which have different identification information or the identification information of which are different after being transformed, do not overlap with each other and belong to the same message resource set.

4. The method according to claim 1, wherein the mapping relationship between the radio resource range and the at least one TP of the one or more TPs corresponding to the access request comprises:
radio resource ranges corresponding to TPs which have different indexes or the indexes of which are different after being transformed do not overlap with each other and belong to a same message resource set.

5. The method according to claim 1, wherein that the message resource set has a mapping relationship with an access request response window comprises:
the radio resource ranges corresponding to the access request responses within a same access request response window belong to a same message resource set, and message resource sets corresponding to different access request response windows do not overlap with each other.

6. The method according to claim 1, wherein that the message resource set has a mapping relationship with the access request response comprises:
access request responses transmitted at the same time correspond to a same message resource set, and message resource sets corresponding to access request responses transmitted at different times do not overlap with each other.

7. The method according to claim 1, wherein a time-frequency position of the message resource set is statically or dynamically configured by a system.

8. The method according to claim 5, wherein a time interval from an upper time domain boundary of the access request response window to a lower time domain boundary of the corresponding message resource set is greater than or equal to a first threshold value.

9. The method according to claim 5, wherein a time interval from a receiving time of the access request response to a lower time domain boundary of the corresponding message resource set is greater than or equal to a second threshold value; or
the radio resource range corresponding to the access request response is located within a message resource set, wherein a time interval between a lower time domain boundary of the message resource set and a transmitting time of the access request is minimum and greater than a third threshold.

10. The method according to claim 1, wherein the determining, according to the access request response, a radio resource range of a message resource set to be occupied for subsequent transmission of a communication message comprises:
determining, according to an indication of the access request response, a message resource for transmitting the communication message, or determining, in a radio resource range corresponding to the access request response, a message resource for transmitting the communication message;
or determining, according to frequency-domain position information indicated in the access request response, a time-frequency resource for transmitting the communication message; or determining a resource group from a plurality of time-frequency resource blocks in the radio resource range corresponding to the access request response, and selecting a time-frequency resource from the resource group for transmitting the communication message according to the indication of the access request response.

11. A resource allocation apparatus for system access, the apparatus being disposed at a terminal and comprising:
a transmission module (21), which is configured to transmit an access request;
a reception module (22), which is configured to receive an access request response transmitted by one or more transmission points, TPs; and
processing module (23), which is configured to determine, according to the access request response, a radio resource range of a message resource set to be occupied for subsequent transmission of a communication message, and occupy the radio resource range to transmit the communication message to at least one TP of the one or more TPs corresponding to the radio resource range, wherein the processing module (23) is configured to determine the radio resource range of the message resource set according to:
a correspondence between the radio resource range and the access request, wherein the radio resource range has a mapping relationship with the at least one TP of the one or more TPs corresponding to the access request, and the message resource set has a mapping relationship with an access request response window or the access request response, wherein the access request response window is a time window, and wherein a time interval between time of transmitting the access request and the time window is of a preset length, or
indication information of the access request response, wherein the processing module (23) is configured to determine the radio resource range according to position information of a radio resource range indicated by the access request response in the message resource set.

12. The apparatus according to claim 11, wherein the processing module (23) is configured to:
determine, according to an indication of the access request response, a message resource for transmitting the communication message, or determine, in a radio resource range corresponding to the access request response, a message resource for transmitting the communication message;
or determine, according to frequency-domain position information indicated in the access request response, a time-frequency resource for transmitting the communication message; or determine a resource group from a plurality of time-frequency resource blocks included in the radio resource range corresponding to the access request response, and select a time-frequency resource from the resource group for transmitting the communication message according to the indication of the access request response.

## Patentansprüche

1. Ressourcenzuweisungsverfahren für Systemzugriff, wobei das Verfahren auf ein Endgerät angewendet wird und Folgendes umfasst:
Übertragen (101) einer Zugriffsanfrage;
Empfangen (102) einer Zugriffsanfrageantwort, die von einem oder mehreren Übertragungspunkten (TPs) übertragen wird; und
Bestimmen (103), gemäß der Zugriffsanfrageantwort, eines Funkressourcenbereichs eines Nachrichtenressourcensatzes, der für die nachfolgende Übertragung einer Kommunikationsnachricht zu belegen ist, und Belegen des Funkressourcenbereichs, um die Kommunikationsnachricht an mindestens einen TP des einen oder der mehreren TPs zu übertragen, der dem Funkressourcenbereich entspricht, wobei das Bestimmen des Funkressourcenbereichs eines Nachrichtenressourcensatzes das Bestimmen des Funkressourcenbereichs gemäß Folgendem beinhaltet:
eine Korrespondenz zwischen dem Funkressourcenbereich und der Zugriffsanfrage, wobei der Funkressourcenbereich eine Zuordnungsbeziehung mit dem mindestens einen TP des einen oder der mehreren TPs hat, die der Zugriffsanfrage entsprechen, und der Nachrichtenressourcensatz eine Zuordnungsbeziehung mit einem Zugriffsanfrage-Antwortfenster oder der Zugriffsanfrageantwort hat, wobei das Zugriffsanfrage-Antwortfenster ein Zeitfenster ist und wobei ein Zeitintervall zwischen dem Zeitpunkt der Übertragung der Zugriffsanfrage und dem Zeitfenster eine vorgegebene Länge hat; oder
Anzeigeinformation der Zugriffsanfrageantwort, wobei das Bestimmen des Funkressourcenbereichs gemäß der Anzeigeinformation der Zugriffsanfrageantwort das Bestimmen des Funkressourcenbereichs gemäß der Positionsinformation eines Funkressourcenbereichs in dem durch die Zugriffsanfrageantwort angegebenen Nachrichtenressourcensatz umfasst.

2. Verfahren nach Anspruch 1, wobei die Zugriffsanfrage Identifikationsinformationen umfasst und die Identifikationsinformationen Zeit-Frequenz-Ressourceninformationen und einen Präambel-Sequenzindex umfassen.

3. Verfahren nach Anspruch 2, wobei die Korrespondenz zwischen dem Funkressourcenbereich und der Zugriffsanfrage Folgendes umfasst:
Funkressourcenbereiche, die den Zugriffsanfragen entsprechen, die unterschiedliche Identifikationsinformationen haben oder deren Identifikationsinformationen nach der Umwandlung unterschiedlich sind, überschneiden sich nicht und gehören zum gleichen Nachrichtenressourcensatz.

4. Verfahren nach Anspruch 1, wobei die Zuordnungsbeziehung zwischen dem Funkressourcenbereich und dem mindestens einen TP des einen oder der mehreren TPs, die der Zugriffsanfrage entsprechen, Folgendes umfasst:
Funkressourcenbereiche, die TPs entsprechen, die unterschiedliche Indizes haben oder deren Indizes nach der Umwandlung unterschiedlich sind, überschneiden sich nicht und gehören zu ein und demselben Nachrichtenressourcensatz.

5. Verfahren nach Anspruch 1, wobei die Tatsache, dass der Nachrichtenressourcensatz eine Zuordnungsbeziehung zu einem Zugriffsanfrage-Antwortfenster hat, Folgendes umfasst:
die Funkressourcenbereiche, die den Zugriffsanfrageantworten innerhalb desselben Zugriffsanfrage-Antwortfensters entsprechen, gehören zu demselben Nachrichtenressourcensatz, und die Nachrichtenressourcensätze, die verschiedenen Zugriffsanfrage-Antwortfenstern entsprechen, überschneiden sich nicht miteinander.

6. Verfahren nach Anspruch 1, wobei die Tatsache, dass der Nachrichtenressourcensatz eine Zuordnungsbeziehung zu der Zugriffsanfrageantwort hat, Folgendes umfasst:
Zugriffsanfrageantworten, die zur gleichen Zeit übertragen werden, entsprechen dem gleichen Nachrichtenressourcensatz, und die Nachrichtenressourcensätze, die den zu unterschiedlichen Zeiten übertragenen Zugriffsanfrageantworten entsprechen, überschneiden sich nicht.

7. Verfahren nach Anspruch 1, wobei eine Zeit-Frequenz-Position des Nachrichtenressourcensatzes statisch oder dynamisch durch ein System ausgebildet wird.

8. Verfahren nach Anspruch 5, wobei ein Zeitintervall von einer oberen Zeitbereichsgrenze des Zugriffsanfrage-Antwortfensters zu einer unteren Zeitbereichsgrenze des entsprechenden Nachrichtenressourcensatzes größer als oder gleich einem ersten Schwellenwert ist.

9. Verfahren nach Anspruch 5, wobei ein Zeitintervall von einem Empfangszeitpunkt der Zugriffsanfrageantwort bis zu einer unteren Zeitbereichsgrenze des entsprechenden Nachrichtenressourcensatzes größer oder gleich einem zweiten Schwellenwert ist; oder
der Funkressourcenbereich, der der Zugriffsanfrageantwort entspricht, innerhalb eines Nachrichtenressourcensatzes lokalisiert ist, wobei ein Zeitintervall zwischen einer unteren Zeitbereichsgrenze des Nachrichtenressourcensatzes und einem Sendezeitpunkt der Zugriffsanfrage minimal und größer als ein dritter Schwellenwert ist.

10. Verfahren nach Anspruch 1, wobei das Bestimmen, gemäß der Zugriffsanfrageantwort, eines Funkressourcenbereichs eines Nachrichtenressourcensatzes, der für die nachfolgende Übertragung einer Kommunikationsnachricht zu belegen ist, Folgendes umfasst:
Bestimmen, gemäß einer Angabe der Zugriffsanfrageantwort, einer Nachrichtenressource zum Übertragen der Kommunikationsnachricht, oder Bestimmen, in einem der Zugriffsanfrageantwort entsprechenden Funkressourcenbereich, einer Nachrichtenressource zum Übertragen der Kommunikationsnachricht;
oder Bestimmen, gemäß den in der Zugriffsanfrageantwort angegebenen Frequenzbereichs-Positionsinformationen, einer Zeitbereichsressource zum Übertragen der Kommunikationsnachricht; oder Bestimmen einer Ressourcengruppe aus einer Vielzahl von Zeit-Frequenz-Ressourcenblöcken im Funkressourcenbereich, die der Zugriffsanfrageantwort entsprechen, und Auswählen einer Zeit-Frequenz-Ressource aus der Ressourcengruppe zum Übertragen der Kommunikationsnachricht gemäß der Angabe in der Zugriffsanfrageantwort.

11. Ressourcenzuweisungsvorrichtung für Systemzugriff, wobei die Vorrichtung an einem Endgerät angeordnet ist und Folgendes umfasst:
ein Übertragungsmodul (21), das ausgebildet ist, um eine Zugriffsanfrage zu übertragen;
ein Empfangsmodul (22), das ausgebildet ist, um eine Zugriffsanfrageantwort zu empfangen, die von einem oder mehreren Zugangspunkten (TPS) übertragen wird; und
ein Verarbeitungsmodul (23), das ausgebildet ist, um gemäß der Zugriffsanfrageantwort einen Funkressourcenbereich eines Nachrichtenressourcensatzes zu bestimmen, der für die nachfolgende Übertragung einer Kommunikationsnachricht zu belegen ist, und den Funkressourcenbereich zu belegen, um die Kommunikationsnachricht an mindestens einen TP des einen oder der mehreren TPs zu übertragen, der dem Funkressourcenbereich entspricht, wobei das Verarbeitungsmodul (23) ausgebildet ist, um den Funkressourcenbereich des Nachrichtenressourcensatzes gemäß Folgendem zu bestimmen:
eine Korrespondenz zwischen dem Funkressourcenbereich und der Zugriffsanfrage, wobei der Funkressourcenbereich eine Zuordnungsbeziehung mit dem mindestens einen TP des einen oder der mehreren TPs hat, die der Zugriffsanfrage entsprechen, und der Nachrichtenressourcensatz eine Zuordnungsbeziehung mit einem Zugriffsanfrage-Antwortfenster oder der Zugriffsanfrageantwort hat, wobei das Zugriffsanfrage-Antwortfenster ein Zeitfenster ist und wobei ein Zeitintervall zwischen dem Zeitpunkt der Übertragung der Zugriffsanfrage und dem Zeitfenster eine vorgegebene Länge hat, oder
Anzeigeinformationen der Zugriffsanfrageantwort, wobei das Verarbeitungsmodul (23) ausgebildet ist, um den Funkressourcenbereich gemäß Positionsinformationen eines Funkressourcenbereichs zu bestimmen, der durch die Zugriffsanfrageantwort in dem Nachrichtenressourcensatz angegeben wird.

12. Vorrichtung nach Anspruch 11, wobei das Verarbeitungsmodul (23) für Folgendes ausgebildet ist:
Bestimmen, gemäß einer Angabe der Zugriffsanfrageantwort, einer Nachrichtenressource zum Übertragen der Kommunikationsnachricht, oder Bestimmen, in einem Funkressourcenbereich, der der Zugriffsanfrageantwort entspricht, einer Nachrichtenressource zum Übertragen der Kommunikationsnachricht;
oder Bestimmen, gemäß den in der Zugriffsanfrageantwort angegebenen Frequenzbereichs-Positionsinformationen, einer Zeitbereichsressource zum Übertragen der Kommunikationsnachricht; oder Bestimmen einer Ressourcengruppe aus einer Vielzahl von Zeit-Frequenz-Ressourcenblöcken, die in dem Funkressourcenbereich enthalten sind, der der Zugriffsanfrageantwort entspricht, und Auswählen einer Zeit-Frequenz-Ressource aus der Ressourcengruppe zum Übertragen der Kommunikationsnachricht gemäß der Angabe in der Zugriffsanfrageantwort.

## Revendications

1. Procédé d'attribution de ressources pour accès à système, le procédé étant appliqué à un terminal et comprenant :
la transmission (101) d'une demande d'accès ;
la réception (102) d'une réponse de demande d'accès transmise par un ou plusieurs points de transmission, Transmission Points TPs ; et
la détermination (103), selon la réponse de demande d'accès, d'une gamme de ressources radio d'un ensemble de ressources de message destinée à être occupée pour une transmission subséquente d'un message de communication, et l'occupation de la gamme de ressources radio pour transmettre le message de communication à au moins un TP de l'un ou des plusieurs TPs correspondant à la gamme de ressources radio, dans lequel la détermination de la gamme de ressources radio d'un ensemble de ressources de message inclut la détermination de la gamme de ressources radio selon :
une correspondance entre la gamme de ressources radio et la demande d'accès, dans lequel la gamme de ressources radio a une relation de mise en coïncidence avec l'au moins un TP de l'un ou des plusieurs TPs correspondant à la demande d'accès, et l'ensemble de ressources de message a une relation de mise en coïncidence avec une fenêtre de réponse de demande d'accès ou la réponse de demande d'accès, dans lequel la fenêtre de réponse de demande d'accès est une fenêtre de temps, et dans lequel un intervalle de temps entre un temps de la transmission de la demande d'accès et la fenêtre de temps est d'une longueur prédéterminée ; ou
des informations d'indication de la réponse de demande d'accès, dans lequel la détermination de la gamme de ressources radio selon des informations d'indication de la réponse de demande d'accès comprend la détermination de la gamme de ressources radio selon des informations de position d'une gamme de ressources radio dans l'ensemble de ressources de message indiquées par la réponse de demande d'accès.

2. Procédé selon la revendication 1, dans lequel la demande d'accès comprend des informations d'identification, et les informations d'identification comprennent des informations de ressources de temps-fréquence et un indice de séquence de préambule.

3. Procédé selon la revendication 2, dans lequel la correspondance entre la gamme de ressources radio et la demande d'accès comprend :
des gammes de ressources radio correspondant aux demandes d'accès, qui ont différentes informations d'identification ou dont les informations d'identification sont différentes après avoir été transformées, ne se chevauchent pas les unes les autres et appartiennent au même ensemble de ressources de message.

4. Procédé selon la revendication 1, dans lequel la relation de mise en coïncidence entre la gamme de ressources radio et l'au moins un TP de l'un ou des plusieurs TPs correspondant à la demande d'accès comprend :
des gammes de ressources radio correspondant à des TPs qui ont différents indices ou dont les indices sont différents après avoir été transformées, ne se chevauchent pas les unes les autres et appartiennent à un même ensemble de ressources de message.

5. Procédé selon la revendication 1, dans lequel le fait que l'ensemble de ressources de message a une relation de mise en coïncidence avec une fenêtre de réponse de demande d'accès comprend :
les gammes de ressources radio correspondant aux réponses de demande d'accès à l'intérieur d'une même fenêtre de réponse de demande d'accès appartiennent à un même ensemble de ressources de message, et des ensembles de ressources de message correspondant à différentes fenêtres de réponse de demande d'accès ne se chevauchent pas les uns les autres.

6. Procédé selon la revendication 1, dans lequel le fait que l'ensemble de ressources de message a une relation de mise en coïncidence avec la réponse de demande d'accès comprend le cas où :
des réponses de demande d'accès transmises en même temps correspondent à un même ensemble de ressources de message, et des ensembles de ressources de message correspondant à des réponses de demande d'accès transmises à des temps différents ne se chevauchent pas les uns les autres.

7. Procédé selon la revendication 1, dans lequel une position de temps-fréquence de l'ensemble de ressources de message est configurée statiquement ou dynamiquement par un système.

8. Procédé selon la revendication 5, dans lequel un intervalle de temps depuis une limite de domaine de temps supérieure de la fenêtre de réponse de demande d'accès jusqu'à une limite de domaine de temps inférieure de l'ensemble de ressources de message correspondant est supérieur ou égal à une première valeur seuil.

9. Procédé selon la revendication 5, dans lequel un intervalle de temps depuis un temps de réception de la réponse de demande d'accès jusqu'à une limite de domaine de temps inférieure de l'ensemble de ressources de message correspondant est supérieur ou égal à une deuxième valeur seuil ; ou
la gamme de ressources radio correspondant à la réponse de demande d'accès est située à l'intérieur d'un ensemble de ressources de message, dans lequel un intervalle de temps entre une limite de domaine de temps inférieure de l'ensemble de ressources de message et un temps de transmission de la demande d'accès est minimum et supérieur à un troisième seuil.

10. Procédé selon la revendication 1, dans lequel la détermination, selon la réponse de demande d'accès, d'une gamme de ressources radio d'un ensemble de ressources de message destinée à être occupée pour une transmission subséquente d'un message de communication comprend :
la détermination, selon une indication de la réponse de demande d'accès, d'une ressource de message pour la transmission du message de communication, ou la détermination, dans une gamme de ressources radio correspondant à la réponse de demande d'accès, d'une ressource de message pour la transmission du message de communication ;
ou la détermination, selon des informations de position de domaine de fréquence indiquées dans la réponse de demande d'accès, d'une ressource de temps-fréquence pour la transmission du message de communication ; ou la détermination d'un groupe de ressources parmi une pluralité de blocs de ressources de temps-fréquence dans la gamme de ressources radio correspondant à la réponse de demande d'accès, et la sélection d'une ressource de temps-fréquence parmi le groupe de ressources pour la transmission du message de communication selon l'indication de la réponse de demande d'accès.

11. Appareil d'attribution de ressources pour accès à système, l'appareil étant disposé à un terminal et comprenant :
un module de transmission (21), qui est configuré pour transmettre une demande d'accès ;
un module de réception (22), qui est configuré pour recevoir une réponse de demande d'accès transmise par un ou plusieurs points de transmission, Transmission Points TPs ; et
un module de traitement (23), qui est configuré pour déterminer, selon la réponse de demande d'accès, une gamme de ressources radio d'un ensemble de ressources de message destinée à être occupée pour une transmission subséquente d'un message de communication, et occuper la gamme de ressources radio pour transmettre le message de communication à au moins un TP de l'un ou des plusieurs TPs correspondant à la gamme de ressources radio, dans lequel le module de traitement (23) est configuré pour déterminer la gamme de ressources radio de l'ensemble de ressources de message selon :
une correspondance entre la gamme de ressources radio et la demande d'accès, dans lequel la gamme de ressources radio a une relation de mise en coïncidence avec l'au moins un TP de l'un ou des plusieurs TPs correspondant à la demande d'accès, et l'ensemble de ressources de message a une relation de mise en coïncidence avec une fenêtre de réponse de demande d'accès ou la réponse de demande d'accès, dans lequel la fenêtre de réponse de demande d'accès est une fenêtre de temps, et dans lequel un intervalle de temps entre un temps de la transmission de la demande d'accès et la fenêtre de temps est d'une longueur prédéterminée, ou
des informations d'indication de la réponse de demande d'accès, dans lequel le module de traitement (23) est configuré pour déterminer la gamme de ressources radio selon des informations de position d'une gamme de ressources radio indiquées par la réponse de demande d'accès dans l'ensemble de ressources de message.

12. Appareil selon la revendication 11, dans lequel le module de traitement (23) est configuré pour :
déterminer, selon une indication de la réponse de demande d'accès, une ressource de message pour la transmission du message de communication, ou déterminer, dans une gamme de ressources radio correspondant à la réponse de demande d'accès, une ressource de message pour la transmission du message de communication ;
ou déterminer, selon des informations de position de domaine de fréquence indiquées dans la réponse de demande d'accès, une ressource de temps-fréquence pour la transmission du message de communication ; ou déterminer un groupe de ressources parmi une pluralité de blocs de ressources de temps-fréquence inclus dans la gamme de ressources radio correspondant à la réponse de demande d'accès, et sélectionner une ressource de temps-fréquence parmi le groupe de ressources pour la transmission du message de communication selon l'indication de la réponse de demande d'accès.
